# EUROPEAN PATENT SPECIFICATION

(11) **EP 0 538 474 B1**
(45) Date of publication and mention of the grant of the patent: **23.07.1997**
(21) Application number: 92905992.1
(22) Date of filing: 10.03.1992
(51) Int. Cl.: C25B 1/26, C25B 9/00

(54) **ELECTROLYTIC VESSEL FOR PRODUCING HYPOCHLORITE**
ELEKTROLYTISCHER BEHÄLTER ZUM HERSTELLEN VON HYPOCHLORIT
CUVE A ELECTROLYSE POUR LA PRODUCTION D'HYPOCHLORITE

(30) Priority: 11.03.1991 JP 45120/91
(43) Date of publication of application: 28.04.1993
(73) Proprietor: CHLORINE ENGINEERS CORP., Ltd., Tokyo 105 (JP)
(72) Inventor: SHINOMIYA, Yoshitsugu, Tamano-shi, Okayama 706 (JP); SUDO, Shigeki, Tamano-shi, Okayama 706-01 (JP)
(74) Representative: Heunemann, Dieter, Dr.
(86) International application number: JP9200282
(87) International publication number: WO9215725

(56) References cited:
- JP-B- 571 593
- JP-B- 578 192
- JP-B- 5 210 109
- US-A- 3 477 939
- US-A- 3 819 503
- FUMIO NICHINE "Operation of electrochemical reaction and Engineering of electrolytic cell", 20 March 1979 (20.03.79), Kagaku Dojin, pages 214-216, 227- 229.
- ISAO OKADA, KEN KANEKO, "Introduction to Chemical Engineering", 15 September 1968 (15.09.68), Co. Ohm, pages 105-108.

## Description

The present invention relates to an electrolytic cell for producing hypochlorite, and in particular to an electrolytic cell for producing high concentration hypochlorite.

Hypochlorite, typically represented by sodium hypochlorite, is widely used in various applications such as bleaching agent, bactericide, or for water and sewage treatment, waste water treatment, for home kitchen or cleaning purposes. There are various methods for producing hypochlorite: a method for producing hypochlorite through reaction of chlorine with alkali hydroxide, which has been obtained by electrolysis of aqueous solution of alkali metal chloride such as salt water, and a method for directly obtaining hypochlorite in an electrolytic cell through electrolysis of alkali metal chloride in an electrolytic cell without diaphragm.

By the method for producing hypochlorite through reaction of alkali oxide with chlorine, high concentration hypochlorite can be produced, and this method is adopted for producing hypochlorite as commercial product. Because extensive electrolytic facilities are required for producing alkali hydroxide and chlorine, this production is normally carried out in electrolysis factories for producing alkali chloride such as large-scale common salt production together with the production of alkali hydroxide or chlorine.

In contrast, by the method for producing hypochlorite through electrolysis of aqueous solution of salt in an electrolytic cell without diaphragm, the produced hypochlorite is comparatively low in concentration but can be directly used for water treatment or bactericide purposes. The manufacturing facilities are also simpler than the electrolysis facilities for producing alkali hydroxide and chlorine. Thus, this method is employed directly at the site where hypochlorite is needed. Moreover, in an electrolytic manufacturing apparatus for manufacturing hypochlorite based on an electrolytic cell without diaphragm, it is possible to adjust electric current according to the needed quantity of hypochlorite, and all of effective chlorine components for bactericide are dissolved in water. Therefore, hypochlorite is now directly produced through electrolysis at the site where it is used because there is no need of storage or transportation, as in the facilities where chlorine in gaseous state has been used in storage facilities of liquid chlorine, or the facilities where high concentration hypochlorite has been stored and used.

In the method for directly producing hypochlorite through electrolysis, aqueous solution of alkali chloride such as common salt is produced in an electrolytic cell without diaphragm. The concentration of salt water supplied to the electrolytic cell as electrolytic solution is 2 to 4%. The higher the concentration of the salt water is, the more the efficiency to generate chlorine at anode increases. However, because salt water containing hypochlorite produced by electrolysis is directly used for water treatment and other purposes, highly concentrated salt water is mixed in the treated water, and this is not desirable. Therefore, salt water with salt concentration similar to that of seawater is normally used.

Hypochlorite is produced through reaction of chlorine generated at anode and alkali generated at cathode, but the hypochlorite is turned to chloric acid when electrolysis is continued further in the electrolytic cell. Accordingly, even when it is attempted to extend the retention time of electrolytic solution to produce high concentration hypochlorite in the electrolytic cell without diaphragm, only the quantity of generated chlorate is increased but the efficiency to generate hypochlorite is decreased.

For this reason, it has been proposed to provide a multi-stage electrolytic cell having a plurality of electrolytic cells with anodes and cathodes separated by partition plates to produce hypochlorite at high current efficiency and without increasing electrolyzing efficiency (e.g. JP-A-52-28104 JP-A-61-44956).

In the meantime, the concentration of hypochlorite produced in a conventional type electrolytic cell is not satisfactory, and there has been strong demands on an electrolytic cell, by which high concentration hypochlorite can be produced at high efficiency.

US-A-3819503 discloses an electrolytic cell for producing oxyhalogen compounds which is operated by maintaining the electrolytic solution at 60°C.

US-A-3477939 discloses an electrolytic cell with bipolar electrodes and provided with a cooling coil to produce chlorate. Both documents show common cooling of the electrolyte leaving the individual cells; in particular, there is a parallel flow of the electrolyte through individual, separated cells.

The present invention takes note that concentration and generating efficiency of hypochlorite are extensively influenced by temperature of electrolytic solution and by efficiency to separate hydrogen gas generated in electrolysis. The present invention provides an electrolytic cell for producing hypochlorite having a plurality of bipolar type unit cells to separate hydrogen gas more efficiently without increasing temperature of electrolytic solution, whereby there are provided an electrolytic solution cooling chamber at least either on an inflow site or on an outflow site of the electrolytic solution in the unit ceil, an overflow plate for overflow of the electrolytic solution over top of the unit cell at outlet of the unit cell, a passage for inflow of the electrolytic solution at lower portion of the unit electrolytic cell at an inlet of the unit cell, and a gas-liquid separation space for gas generated in the electrolytic cell above the electrolytic solution surface. With such arrangement, the electrolytic solution with increased temperature after electrolysis in each of the unit cells is cooled down, and the reaction to turn hypochlorite to chlorate due to temperature increase can be prevented. Also, the electrolytic solution is moved from the unit cell to the cooling chamber through the overflow plate, and a space is provided above the unit cell. Gas-liquid separation of hydrogen generated at cathode by electrolysis is quickly carried out in the upper space, and the increase of electrolytic voltage due to bubbling can be minimized.

In a bipolar type unit cell, there are provided bipolar electrodes made of titanium plate where anode catalytic covering is formed on one-half of the plate, i.e, from its center to one end. The portion with anode catalytic covering is used as anode, and the portion without anode catalytic covering is used as cathode, and these are mounted on a partition plate in form of a comb. Thus, the electrolytic cell can be easily assembled and maintained. A cooling pipe is furnished in a cooling chamber so that coolant flows from high temperature electrolytic solution to low temperature electrolytic solution, and this provides high cooling effect for the electrolytic solution.
Fig. 1 is a plan view of an electrolytic cell of an embodiment of the present invention with its cover removed;
Fig. 2 is a cross-sectional view of the electrolytic cell of Fig. 1 along the line A - A; and
Fig. 3 is a perspective view of a bipolar electrode of a unit cell.

In a box type electrolytic cell, a plurality of unit cells are aligned in horizontal direction, and there are provided an electrolytic solution cooling chamber at least either on an inflow site or an outflow site of the bipolar type unit cells, an overflow plate for overflow of the electrolytic solution from top of the unit cells at outlet of the unit cell, and an electrolytic solution passage for inflow of the electrolytic solution from lower portion of the unit cell at an inlet of the unit cell, whereby solution flows into the unit cell from below and flows out from above, and a space for gas-liquid separation for gas generated in the electrolytic cell is furnished above the electrolytic solution surface. As the result, bubbles from the electrolytic solution can be quickly removed, and the electrolytic solution can be satisfactorily cooled down.

In the following, the features of the present invention will be described in connection of the drawings.

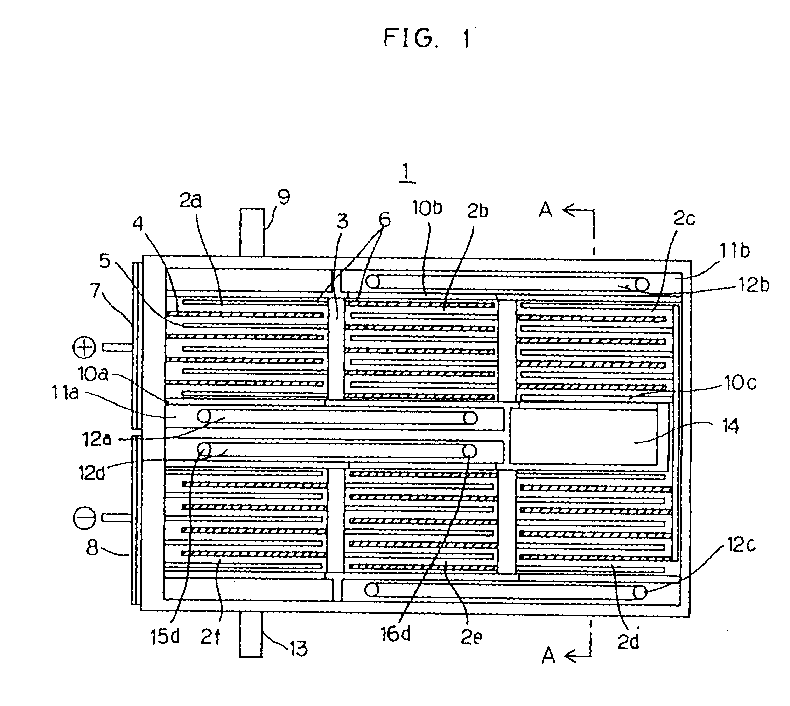

Fig. 1 is a plan view of an electrolytic cell of an embodiment of the invention with its cover removed. An electrolytic cell 1 is made of metal covered with synthetic resin such as polyvinyl chloride or corrosion-resistant material such as rubber. In Fig. 1, the electrolytic cell comprises 6 unit cells of 2a, 2b, 2c, 2d, 2e and 2f, and a plurality of bipolar electrodes 6 are furnished, which have anodes 4 on one side of a partition plate, and cathodes 5 on the other side.

In the unit cells 2a and 2f, which connect the anodes and the cathodes with external electric circuit, the anodes 4 and the cathodes 5 are mounted on walls of the electrolytic cell, and an anode terminal 7 and a cathode terminal 8 are mounted for connection with external electric circuit.

The electrolytic cell is equipped with a salt water inlet 9, and salt water is supplied to the unit cell 2a, i.e. the unit cell at one end. After flowing into the unit cell 2a, the salt water is pushed by inflow pressure of salt water and by a flow caused by the rise of hydrogen bubbles generated by electrolysis and overflows over a first overflow plate 10a and flows into a first cooling chamber 11a. The electrolytic solution sent into the first cooling chamber is cooled down by a first cooling pipe 12a. Various materials such as metal, synthetic resin, etc. can be used for the cooling pipe. In case a metal with high thermal conductivity is used, it is preferable to use titanium or its alloy, which exhibits high corrosion-resistant property in the electrolytic solution.

The electrolytic solution cooled in the first cooling chamber is supplied to a next unit cell 2b through a passage, which is furnished in lower portion of the cooling chamber. After electrolyzed, the electrolytic solution is introduced from the unit cell 2b, flows over a second overflow plate 10b, and is sent into a second cooling chamber 11b. Then, it is sent from a passage in lower portion of the second cooling chamber to a third unit cell 2c. Thus, the solution is sequentially cooled down and electrolyzed and is discharged from an electrolytic solution outlet 13 provided on side wall of the electrolytic cell.

The cooling chamber may be furnished between the unit cells, while a connection chamber 14 without cooling pipe may be provided as shown in Fig. 1, taking temperature rise of the solution into account. The coolant for the cooling pipe is supplied from an inlet 15d of a fourth cooling pipe 12d, which is at a position closest to an outlet of electrolytic solution in a direction opposite to the flowing direction of the electrolytic solution. Then, it is discharged from an outlet 16d and is supplied through an inlet 15c of a third cooling pipe 12c. Further, it is discharged from an outlet 16d and is sent to the second cooling pipe 12b, and further to the first cooling pipe 12a. By sending the coolant in this way, it is possible to equalize temperature distribution in each of the unit cells compared with the case where the coolant is passed in the same direction as the electrolytic solution. Thus, hypochlorite can be produced at higher efficiency.

In case there are many unit cells, the coolant may not be passed continuously through all of the unit cells, but it is preferable to divide the coolant into several groups each assigned for every several unit cells and to send it from an upstream cell to a downstream cell in a direction opposite to the flowing direction of the electrolytic solution because this is more convenient to equalize temperature distribution between the unit cells.

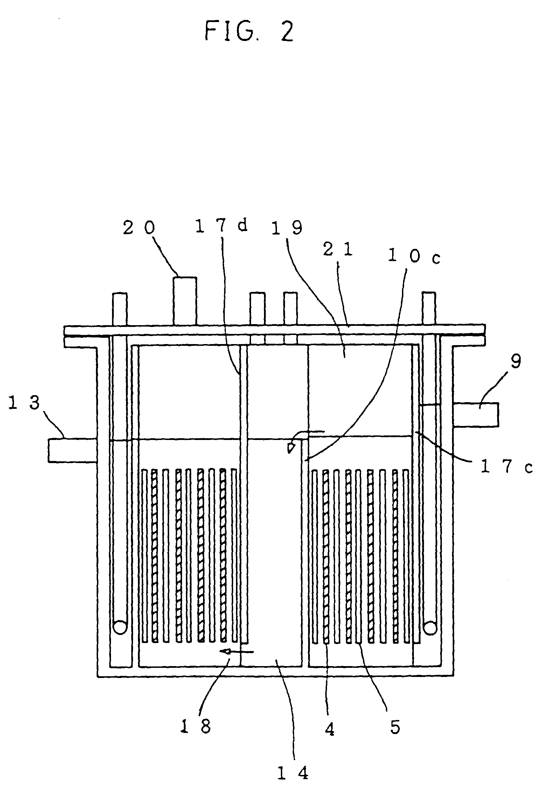

Fig. 2 is a cross-sectional view of the electrolytic cell of Fig. 1 along the line A-A. The solution is supplied to the unit cell 2c through an electrolytic solution passage 18 below a partition wall 17c of a second cooling chamber 2b. Hydrogen gas bubbles generated at cathode by electrolysis rise between anode and cathode of the unit cell and are separated to gas and liquid in an upper space of the electrolytic cell. Then, the gas is discharged from a hydrogen outlet 20 and is processed further. On the other hand, the electrolytic solution flown over a third overflow plate 10c in upper portion of the unit cell 2c enters into a connection chamber 14 where there is no cooling pipe. From the connection chamber, the electrolytic solution is sent to a next unit cell 2. A partition wall 17d extending to upper portion of the electrolytic cell is provided so that the electrolytic solution does not flow in from above the unit cell. Between the partition wall and a cover 21 of the electrolytic cell, there is a space where gas can freely move, and the generated hydrogen gas can be discharged without any obstruction.

The electrolytic solution sent from below the partition wall 17d to a unit cell 2d is electrolyzed, enters a third cooling chamber 12c through a fourth overflow plate 10d and is cooled down.

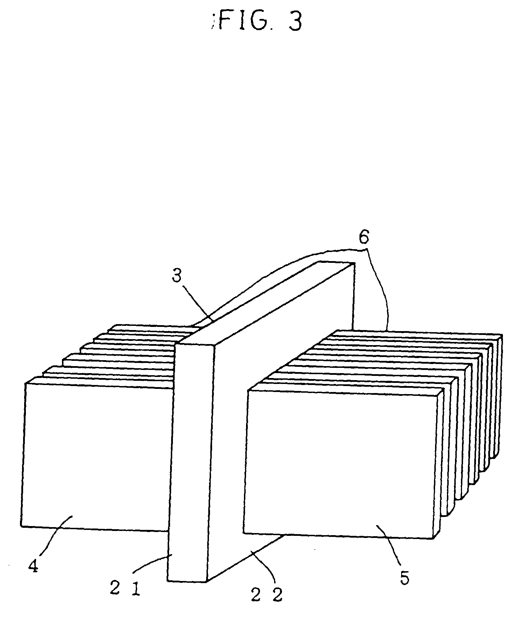

Fig. 3 is a perspective view of a bipolar electrode of the unit cell. On a partition plate 3, a plurality of bipolar electrodes 6 having anodes 4 on one side and cathodes 5 on the other side are mounted. The partition plate is mounted on the electrolytic cell using gasket and the like after unit cells have been formed so that the electrolytic solution does not move along lower surface 22 and side surface 23. A corrosion-resistant metal plate such as titanium is used as the bipolar electrode and a covering with high catalytic activity is formed on one-half of the surface, i.e. from its center to one side, using a metal of platinum family or its oxide as anode. As the result, one half of the plate can be used as anode and the other half as cathode. Thus, a bipolar electrode with high electrical and structural properties can be prepared. The bipolar electrode should be mounted on the partition plate so that the electrolytic solution may not leak out. Each of the bipolar electrodes may be electrically connected on the partition plate to equally distributing the current to each of the bipolar electrodes.

The unit cells in the electrolytic cell of the present invention can be furnished as many as desired, depending upon the needed quantity of hypochlorite. In case there is restriction in installation space, electrolytic cells with fewer unit cells may be lined up in multiple stages on a rack instead of furnishing many unit cells.

In the following, description will be given on some examples:

### Example 1

On a titanium plate of 150 mm in length and 125 mm in width, an electrode catalytic substance containing oxide of platinum family metal, suitable as anode for the production of hypochlorite, was coated on one half of the plate surface, i.e. from its center to one end. This bipolar electrode plate (manufactured by Permelec Electrode Co., Ltd.) was mounted on a partition plate made of polyvinyl chloride. Eight pieces of the bipolar electrodes were mounted on predetermined spots of an electrolytic cell, and the electrolytic cell having 20 unit cells was assembled. From a salt water inlet, salt water with concentration of 3 weight % and kept at 20°C was introduced, and this was electrolyzed with current density of 12 A/dm². Electrolytic voltage of each unit cell was 3.7 V.

A titanium pipe of 22 mm in diameter was used as a cooling pipe, and cooling water kept at 15°C was supplied. The temperature of the cooling water at the outlet was 20°C.

The temperature of the electrolytic solution discharged from the electrolytic solution outlet was 30°C. Effective chlorine concentration of the electrolytic solution was 12000 ppm, and current efficiency in this case was 65%.

### Example 2

A titanium plate of 150 mm in length and 274 mm in width was used as the electrode. On its portion of 150 mm in length and 137 mm in width, i.e. from its center to one end, a catalytic covering for hypochlorite was formed by the same procedure as in the Example 1. Eight pieces of such plate were mounted to form a unit cell, and 20 such unit cells were used to assemble an electrolytic cell.

From a salt water inlet, salt water with concentration of 3 weight % and kept at 18°C was introduced, and this was electrolyzed with current density of 8 A/dm². Electrolytic voltage for the entire electrolytic cell was 67 V.

A titanium pipe of 22 mm in diameter was used as a cooling pipe. Cooling water kept at 16°C was supplied from a cooling chamber of an upstream electrolytic cell to a downstream electrolytic cell for every 4 unit cells. The temperature of the cooling water at outlet was 21°C.

The electrolytic solution discharged at the outlet was at 28°C. Effective chlorine concentration of the electrolytic solution was 12100 ppm, and current efficiency in this case was 67%.

### Example 3

Electrolysis was performed in the same manner as in the Example 2, except that the cooling water was sent continuously in the same direction as the flowing direction of the electrolytic solution, i.e. from the cooling chamber of the downstream unit cell to the cooling chamber of the upstream unit cell. As the result, temperature of the electrolytic cell was reduced in the front half of the electrolytic cell closer to the inlet of the coolant. Electrolytic voltage in the front half of the unit cell increased, while temperature of the electrolytic solution in the latter half of the unit cell extensively increased. Thus, electrolytic voltage of the entire electrolytic cell was 70 V, and current efficiency decreased to 62%.

### Example 4

Electrolysis was performed by the same procedure as in the Example 2, except that coolant was continuously supplied from the cooling chamber of an upstream unit cell toward the cooling chamber of a downstream unit cell. As the result, the temperature of the cooling water at the outlet increased. The voltage of the entire electrolytic cell was 66 V, and current efficiency was 64%.

### INDUSTRIAL APPLICABILITY

In a box type electrolytic cell, a plurality of unit cells were mounted in horizontal direction, and there are provided a cooling chamber of electrolytic solution at least on an inflow site or an outflow site of the solution on each of the unit cells, an overflow plate for overflow of the electrolytic solution over top of the unit cells, and an electrolytic solution passage for inflow of the solution at lower portion of each of unit cells, whereby the solution flows into the unit cell from below and flows out from above, a space for gas-liquid separation is furnished for gas generated in the electrolytic cell above the electrolytic solution surface to facilitate quick separation of bubbles from electrolytic solution. Thus, it is possible to cool down the electrolytic solution satisfactorily, to minimize decomposition of hypochlorite due to temperature increase of electrolytic solution, and to efficiently produce hypochlorite with high concentration. Moreover, because unit cells and cooling chambers are furnished within the box type electrolytic cell of the present invention, there is no possibility of liquid leakage from laminated portions of unit cells as in the case of a conventional filter press type electrolytic cell.

## Claims

1. A box-type electrolytic cell for producing hypochlorite, comprising a plurality of vertical bipolar type unit cells (2a to 2f) aligned in horizontal direction and in series fluid communication with each other, a cooling chamber (11a, 11b) of electrolytic solution at least on an inflow site or on an outflow site of the electrolytic solution at the unit cells, an overflow plate (10a, 10b) for overflow of the electrolytic solution over the top of the unit cell at the outlet of the unit cell, and a passage (18) for electrolytic solution for inflow of the electrolytic solution at the inlet and at the lower portion of the unit cell, wherein a space for gas-liquid separation for gas generated in the electrolytic cell is provided above the electrolytic solution surface.

2. An electrolytic cell according to Claim 1, wherein a titanium plate is used in each of the bipolar type unit cells, an anode catalytic covering is formed on one half of said plate, i.e. from its center to one end, while the other half of the plate surface is not covered with said covering, and wherein said portion of the titanium plate covered with said anode catalytic covering of the bipolar electrode and used as an anode (4), said portion of the titanium plate without anode catalytic covering and used as a cathode (5), and a partition plate (3) are mounted in form of a comb.

3. An electrolytic cell according to claim 1 or 2, characterized in that cooling pipes (12) furnished in the cooling chambers are arranged in such manner that coolant flows from high temperature electrolytic solution to low temperature electrolytic solution.

4. A method of producing hypochlorite in a box-type electrolytic cell according to any of claim 1 to 3 wherein a plurality of bipolar type unit cells (2a to 2f) are aligned in horizontal direction and in series fluid communication with each other, a cooling chamber (11a, 11b) of electrolytic solution at least on an inflow site or on outflow site of the electrolytic solution at the unit cells, an overflow plate (10a, 10b) for overflow of the electrolytic solution over the top of the unit cell at the outlet of the unit cell, and a passage (18) for electrolytic solution for inflow of the electrolytic solution at the inlet and at the lower portion of the unit cell, wherein a space for gas-liquid separation for gas generated in the electrolytic cell is provided above the electrolytic solution surface.

5. A method according to Claim 4, wherein a titanium plate is used in each of the bipolar type unit cells, an anode catalytic covering is formed on one half of said plate, i.e. from its center to one end, while the other half of the plate surface is not covered with said covering, and wherein said portion of the titanium plate covered with said anode catalytic covering of the bipolar electrode and used as an anode (4), said portion of the titanium plate without anode catalytic covering and used as a cathode (5), and a partition plate (3) are mounted in form of a comb.

6. A method according to claim 4 or 5, characterized in that cooling pipes (12) furnished in the cooling chambers are arranged in such manner that coolant flows from high temperature electrolytic solution to low temperature electrolytic solution.

## Patentansprüche

1. Kastenförmige Elektrolysezelle zum Herstellen von Hypochlorit mit: mehreren vertikalen bipolaren Zelleneinheiten (2a bis 2f), die in horizontaler Richtung ausgerichtet sind und in einer seriellen Fluidverbindung miteinander stehen, einer Elektrolytlösungs-Kühlkammer (11a, 11b) zumindest an einer Einlaufstelle oder an einer Auslaufstelle der Elektrolytlösung an den Zelleneinheiten, einer Überlaufplatte (10a, 10b) für den Überlauf der Elektrolytlösung über die Oberseite der Zelleneinheiten an dem Auslaß der Zelleneinheit, und einem Elektrolytlösungskanal (18) für den Einlauf der Elektrolytlösung an dem Einlaß und an dem unteren Abschnitt der Zelleneinheit, wobei ein Raum für die Gas/Flüssigkeits-Trennung für in der Elektrolysezelle erzeugtes Gas über der Elektrolytlösungsoberfläche vorgesehen ist.

2. Elektrolysezelle nach Anspruch 1, wobei eine Titanplatte in jeder bipolaren Zelleneinheit verwendet wird, ein katalytischer Anodenüberzug auf einer Hälfte der Platte, d.h., von deren Mitte bis zu einem Ende ausgebildet ist, während die andere Hälfte der Plattenfläche nicht mit dem Überzug bedeckt ist, und wobei der Abschnitt der Titanplatte, der mit dem die bipolare Elektrode überdeckenden katalytischen Anodenüberzug bedeckt ist und der als eine Anode (4) verwendet wird, der Abschnitt der Titanplatte ohne katalytischen Anodenüberzug, der als eine Kathode (5) verwendet wird, und eine Unterteilungsplatte (3) in der Form eines Kamms befestigt sind.

3. Elektrolysezelle nach Anspruch 1 oder 2, dadurch gekennzeichnet, daß in den Kühlkammern untergebrachte Kühlrohre (12) in einer solchen Weise angeordnet sind, daß Kühlmittel von Elektrolytlösung mit hoher Temperatur zu einer Elektrolytlösung mit niedriger Temperatur fließt.

4. Verfahren zum Herstellen von Hypochlorit in einer kastenförmigen Elektrolysezelle nach einem der Ansprüche 1 bis 3, wobei mehrere bipolare Zelleneinheiten (2a bis 2f) in horizontaler Richtung ausgerichtet sind und in einer seriellen Fluidverbindung miteinander stehen, und eine Elektrolytlösungs-Kühlkammer (11a, 11b) zumindest an einer Einlaufstelle oder an einer Auslaufstelle der Elektrolytlösung an den Zelleneinheiten, eine Überlaufplatte (10a, 10b) für den Überlauf der Elektrolytlösung über die Oberseite der Zelleneinheiten an dem Auslaß der Zelleneinheit, und ein Elektrolytlösungskanal (18) für den Einlauf der Elektrolytlösung an dem Einlaß und an dem unteren Abschnitt der Zelleneinheit vorgesehen sind, wobei ein Raum für die Gas/Flüssigkeits-Trennung für in der Elektrolysezelle erzeugtes Gas über der Elektrolytlösungsoberfläche vorgesehen ist.

5. Verfahren nach Anspruch 4, wobei eine Titanplatte in jeder bipolaren Zelleneinheit verwendet wird, ein katalytischer Anodenüberzug auf einer Hälfte der Platte, d.h., von deren Mitte bis zu einem Ende ausgebildet ist, während die andere Hälfte der Plattenfläche nicht mit dem Überzug bedeckt ist, und wobei der Abschnitt der Titanplatte, der mit dem die bipolare Elektrode überdeckenden katalytischen Anodenüberzug bedeckt ist und der als eine Anode (4) verwendet wird, der Abschnitt der Titanplatte ohne katalytischen Anodenüberzug, der als eine Kathode (5) verwendet wird, und eine Unterteilungsplatte (3) in der Form eines Kamms befestigt sind.

6. Verfahren nach Anspruch 4 oder 5, dadurch gekennzeichnet, daß in den Kühlkammern untergebrachte Kühlrohre (12) in einer solchen Weise angeordnet sind, daß Kühlmittel von Elektrolytlösung mit hoher Temperatur zu einer Elektrolytlösung mit niedriger Temperatur fließt.

## Revendications

1. Cellule électrolytique de type caisson destinée à produire de l'hypochlorite, comprenant une pluralité de cellules unitaires verticales de type bipolaire (2a à 2f) alignées dans la direction horizontale et en communication de fluide en séries entre elles, une chambre de refroidissement (11a, 11b) de solution électrolytique au moins sur un site d'arrivée ou sur un site de sortie de la solution électrolytique au niveau des cellules unitaires, une plaque de trop-plein (10a, 10b) pour le trop-plein de la solution électrolytique par-dessus le sommet de la cellule unitaire à la sortie de la cellule unitaire, et un passage (18) pour l'arrivée de la solution électrolytique à l'entrée et au niveau de la portion inférieure de la cellule unitaire, dans laquelle un espace destiné à la séparation gaz-liquide pour le gaz produit dans la cellule électrolytique, est disposé au-dessus de la surface de la solution électrolytique.

2. Cellule électrolytique selon la revendication 1, dans laquelle une plaque de titane est utilisée dans chacune des cellules unitaires de type bipolaire, un revêtement catalytique d'anode est formé sur une moitié de la plaque, c'est-à-dire en partant de son centre en direction d'une extrémité, tandis que l'autre moitié de la surface de la plaque n'est pas dotée de ce revêtement, et dans laquelle la portion de la plaque de titane munie du revêtement catalytique d'anode de l'électrode bipolaire, et utilisée comme anode (4), la portion de la plaque de titane sans revêtement catalytique d'anode et utilisée comme cathode (5) et une plaque de séparation (3) sont assemblées sous forme de peigne.

3. Cellule électrolytique selon la revendication 1 ou 2, caractérisée en ce que les conduites de refroidissement (12) installées dans les chambres de refroidissement, sont disposées de telle manière que le réfrigérant s'écoule depuis la solution électrolytique haute température vers la solution électrolytique basse température.

4. Procédé pour la production d'hypochlorite dans une cellule électrolytique de type caisson selon l'une quelconque des revendications 1 à 3, dans lequel une pluralité de cellules unitaires de type bipolaire (2a à 2f) sont alignées en direction horizontale et en communication de fluide en séries entre elles, une chambre de refroidissement (lla, llb) de solution électrolytique au moins sur un site d'arrivée ou sur un site de sortie de la solution électrolytique au niveau des cellules unitaires, une plaque de trop-plein (10a, 10b) pour le trop-plein de la solution électrolytique par-dessus le sommet de la cellule unitaire à la sortie de la cellule unitaire, et un passage (18) pour l'arrivée de la solution électrolytique à l'entrée de la portion inférieure de la cellule unitaire, dans lequel un espace pour la séparation gaz-liquide pour le gaz conduit dans la cellule électrolytique, est disposé au-dessus de la surface de solution électrolytique.

5. Procédé selon la revendication 4, dans lequel une plaque de titane est utilisée dans chacune des cellules unitaires de type bipolaire, un revêtement catalytique d'anode est formé sur une moitié de la plaque, c'est-à-dire en partant de son centre vers une extrémité, tandis que l'autre moitié de la surface de la plaque n'est pas dotée de ce recouvrement et dans lequel la portion de la plaque de titane munie du revêtement catalytique d'anode de l'électrode bipolaire et utilisée comme anode (4), la portion de la plaque de titane sans revêtement catalytique d'anode et utilisée comme cathode (5) et une plaque de séparation (3) sont assemblées sous forme de peigne.

6. Procédé selon la revendication 4 ou 5, caractérisé en ce que les conduites de refroidissement (12) installées dans les chambres de refroidissement sont disposées de telle manière que le réfrigérant s'écoule depuis la solution électrolytique haute température vers la solution électrolytique basse température.
